# EUROPEAN PATENT APPLICATION

(11) **EP 4 507 274 A1**
(43) Date of publication of application: **12.02.2025**
(21) Application number: 24188863.5
(22) Date of filing: 16.07.2024
(51) Int. Cl.: H04L 67/00, H04W 52/02, H04W 76/28, H04L 67/14

(54) **MONITORING DOWNLINK CONTROL INFORMATION BASED ON CONFIGURATION INFORMATION AND STATUS OF CELL DISCONTINUOUS OPERATION**

(30) Priority: 09.08.2023 WO PCT/CN2023/112052
(71) Applicant: Nokia Technologies Oy, 02610 Espoo (FI)
(72) Inventor: LAURIDSEN, Mads, Gistrup (DK); KHLASS, Ahlem, Massy (FR); LASELVA, Daniela, Klarup (DK); ZHENG, Naizheng, Beijing (CN); DU, Lei, Beijing (CN); WU, Chunli, Beijing (CN)
(74) Representative: Nokia EPO representatives

(57) **Abstract**

The present disclosure relates to activation or deactivation of cell discontinuous reception/discontinuous reception (DTX/DRX). In particular, a network device transmits configuration information associated with downlink control information (DCI) to a terminal device. The configuration information indicates when to monitor the DCI. The terminal device monitors the DCI based on the configuration information.

## Description

### FIELDS

Various example embodiments of the present disclosure generally relate to the field of telecommunication and in particular, to methods, devices, apparatuses and computer readable storage medium for monitoring downlink control information (DCI) based on configuration information and status of cell discontinuous operation.

### BACKGROUND

Network energy saving (NES) is a hot topic in communication field. For example, cell DTX/DRX is also proposed at network device side in order to save power at the network device. Similarly, cell DTX/DRX is a technique that allows the network device to sleep within a DTX/DRX cycle when there are no packets to be transmitted/received. Therefore, it is worth studying on how to activate the cell DTX/DRX.

### SUMMARY

In a first aspect of the present disclosure, there is provided an apparatus. The apparatus comprises at least one processor; and at least one memory storing instructions that, when executed by the at least one processor, cause the apparatus to: receive, from a network device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and monitor the downlink control information based on the configuration information and a status of the cell discontinuous operation.

In a second aspect of the present disclosure, there is provided an apparatus. The apparatus comprises at least one processor; and at least one memory storing instructions that, when executed by the at least one processor, cause the apparatus to: transmit, to a terminal device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and transmit, to the terminal device, the downlink control information based on the configuration information and a status of the cell discontinuous operation.

In a third aspect of the present disclosure, there is provided a method. The method comprises: receiving, from a network device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and monitoring the downlink control information based on the configuration information and a status of the cell discontinuous operation.

In a fourth aspect of the present disclosure, there is provided a method. The method comprises: transmitting, to a terminal device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and transmitting, to the terminal device, the downlink control information based on the configuration information and a status of the cell discontinuous operation.

In a fifth aspect of the present disclosure, there is provided a first apparatus. The first apparatus comprises means for receiving, from a network device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and means for monitoring the downlink control information based on the configuration information and a status of the cell discontinuous operation.

In a sixth aspect of the present disclosure, there is provided a second apparatus. The second apparatus comprises means for transmitting, to a terminal device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and means for transmitting, to the terminal device, the downlink control information based on the configuration information and a status of the cell discontinuous operation.

In a seventh aspect of the present disclosure, there is provided a computer readable medium. The computer readable medium comprises instructions stored thereon for causing an apparatus to perform at least the method according to the third aspect.

In an eighth aspect of the present disclosure, there is provided a computer readable medium. The computer readable medium comprises instructions stored thereon for causing an apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates a signaling chart for cell DTX/DRX according to example embodiments of the present disclosure;
FIG. 3A to FIG. 3C illustrate schematic diagrams of cell DTX/DRX patterns according to example embodiments of the present disclosure;
FIG. 4A to FIG. 4F illustrate schematic diagrams of monitoring occasions in cell DTX/DRX patterns according to example embodiments of the present disclosure, respectively;
FIG. 5 illustrates a flowchart of a method implemented at a first device according to some example embodiments of the present disclosure;
FIG. 6 illustrates a flowchart of a method implemented at a second device according to some example embodiments of the present disclosure;
FIG. 7 illustrates a simplified block diagram of a device that is suitable for implementing example embodiments of the present disclosure; and
FIG. 8 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

As used herein, the term "RRC connected state" or "RRC connected mode" used herein may refer to a state in which service radio bearer and data radio bearer are allocated for the terminal device. The term "RRC idle state" or "RRC idle mode" used herein may refer to a state where the terminal device is switched on but does not have any established RRC connection. The term "RRC inactive state" or "RRC inactive mode" used herein may refer to a state when there is an RRC connection that has been suspended.

As used herein, the term "cell discontinuous reception (DRX)" used herein may refer to a technique that allows a network device to receive data within a period and sleep within another period when there are no packets to be received. The term "cell discontinuous transmission (DTX)" used herein refers to a technique that allows the network device to transmit data within a period and sleep within another period when there are no packets to be transmitted. The cell DRX/DTX can be used in mobile communication to conserve the battery and/or save energy of the network device. The term "on duration" or "active period" used for cell DRX refers to a time period during which the network device is able to monitor a channel, for example, a physical control channel or a physical shared channel, and receive one or more of: data, reference signal(s) or control information on the channel. The term "DRX period" or "opportunity for DRX" or "off time" or "off duration" or "non-active/inactive period" used for cell DRX refers to a time period during which the network device does not monitor the channel and does not receive data or control information on the channel. The term "DRX cycle" used herein comprises an on-duration during which the network device may monitor the channel and a DRX period during which the network device can skip reception of channel. The term "on duration" or "active period" used for cell DTX refers to a time period during which the network device is able to transmit data or control information on a channel, for example, a physical control channel or a physical shared channel. The term "DTX period" or "opportunity for DTX" or "off time" or "off duration" or "non-active/inactive period" for cell DTX used herein refers to a time period during which the network device does not transmit data or control information on the channel. The term "DTX cycle" used herein comprises an on-duration during which the network device may transmit data or control information on the channel and a DTX period during which the network device can skip transmission of channel. The term "DRX cycle" used herein comprises an on-duration during which the network device may receive data or control information on the channel and a DRX period during which the network device can skip reception of channel.

As mentioned above, the cell DTX/DRX is proposed. The intention of cell DTX/DRX is to define periods where the cell is not transmitting/receiving signals/channels related to RRC Connected UEs. For example, the cell may omit transmission of certain CSI-RS and reception of SR/BSR during certain periods. The UE is not expected to receive and/or process the periodic or semi-persistent channel state information reference signal (CSI-RS) from the gNB, during non-active periods of cell DTX. In other words, the network device may omit it during non-active period for energy saving.

Embodiments of the present disclosure relate to activation or deactivation of cell DTX/DRX. In particular, a network device transmits configuration information associated with downlink control information (DCI) to a terminal device. The configuration information indicates, to the terminal device, when (e.g., time instant(s)) to monitor the DCI that can be used to activate/deactivate a certain DRX/DRX pattern of the cell. The terminal device monitors the DCI based on the configuration information. In this way, it can achieve enhanced handling of activation/deactivation of cell DTX/DRX based on transmitted DCI (such as a new group-common DCI format 2_x). Further, it can realize optimized tradeoff between network energy saving (with cell DTX/DRX enabled), quality of service (QoS) fulfillment (dynamic indication of cell DRX/DRX (de)-activation, and UE power saving (optimized monitoring occasions).

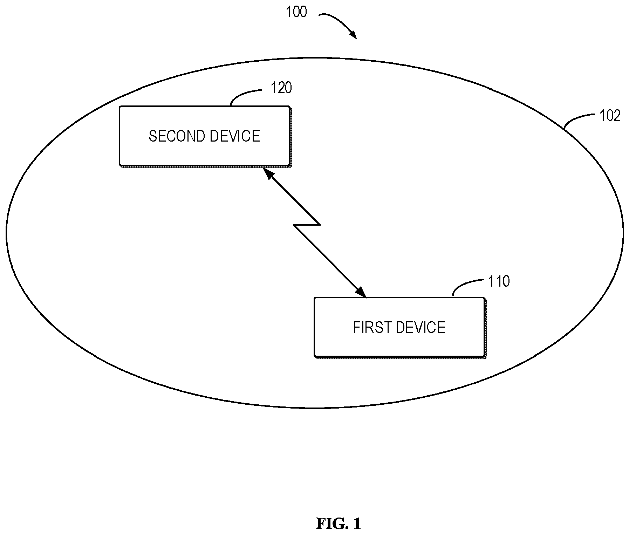

FIG. 1 illustrates an example communication environment 100 in which example embodiments of the present disclosure can be implemented. In the communication environment 100, a first device 110 and a second device 120 may communicate with each other.

The first device 110 may be a terminal device, such as a UE. The second device 120 may be a network device, such as gNB. The first device 110 may be in a cell 102 which is the serving cell.

In the following, for the purpose of illustration, some example embodiments are described with the first device 110 operating as a terminal device and the second device 120 operating as a network device. However, in some example embodiments, operations described in connection with a terminal device may be implemented at a network device or other device, and operations described in connection with a network device may be implemented at a terminal device or other device.

In some example embodiments, if the first device 110 is a terminal device and the second device 120 is a network device, a link from the second device 120 to the first device 110 is referred to as a downlink (DL), and a link from the first device 110 to the second device 120 is referred to as an uplink (UL). In DL, the second device 120 is a transmitting (TX) device (or a transmitter) and the first device 110 is a receiving (RX) device (or a receiver). In UL, the first device 110 is a TX device (or a transmitter) and the second device 120 is a RX device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Example embodiments of the present disclosure will be described in detail below with reference to the accompanying drawings.

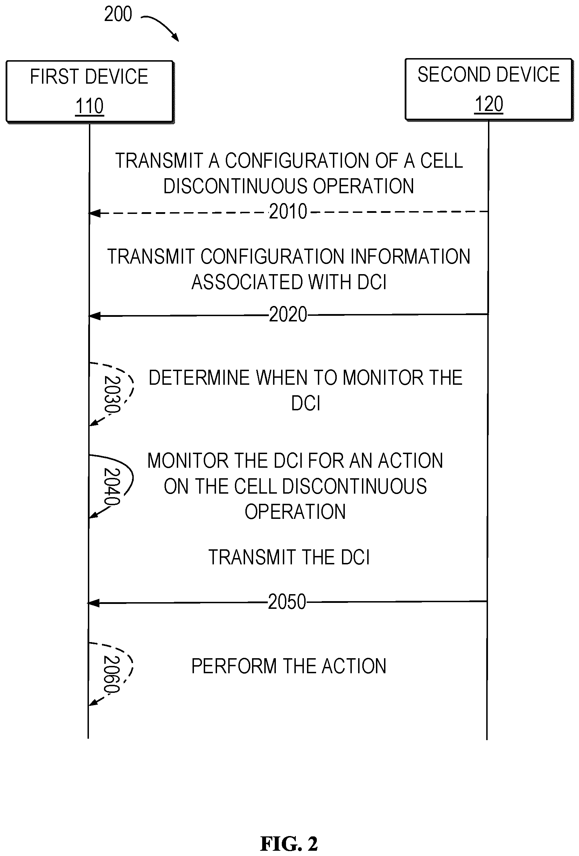

Reference is made to FIG. 2, which illustrates a signaling flow 200 in accordance with some embodiments of the present disclosure. For the purposes of discussion, the signaling flow 200 will be discussed with reference to FIG. 1, for example, by using the first device 110, the second device 120.

The second device 120 may transmit (2010) a configuration of a cell discontinuous operation of a cell (for example, the cell 102) to the first device 110. In other words, the first device 110 may receive the configuration of the cell discontinuous operation. The cell discontinuous operation may include a cell discontinuous transmission (DTX). Alternatively, or in addition, the cell discontinuous operation may include a cell discontinuous reception (DRX).

The configuration of the cell discontinuous operation may indicate a periodicity of the cell discontinuous operation, for example, a periodicity of the cell DTX and/or cell DRX. The configuration of the cell discontinuous operation may also indicate an on duration (i.e., active period) for the cell discontinuous operation. In addition, the configuration of the cell discontinuous operation may indicate an offset of the on duration of the cell discontinuous operation.

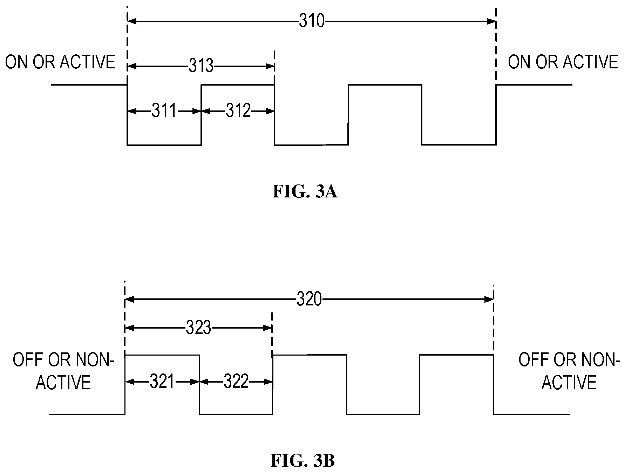

FIG. 3A shows an example of the configuration of the cell discontinuous operation. According to the cell discontinuous operation pattern 310 shown in FIG. 3A, there is an on duration 311 (also referred to as active period) and a non-active period 312 within one periodicity 313 of the cell discontinuous operation. As shown in FIG. 3A, the operation with transmission/reception at the second device 120 may assumed as on or active. In other words, the second device 120 may always perform transmission/reception outside the cell discontinuous pattern 310. It is noted that the cell discontinuous operation pattern 310 may be a cell DRX pattern or a cell DTX pattern.

FIG. 3B shows an example of the configuration of the cell discontinuous operation. According to the cell discontinuous operation pattern 320 shown in FIG. 3B, there is an on duration 321 (also referred to as active period) and a non-active period 322 within one periodicity 323 of the cell discontinuous operation. As shown in FIG. 3B, the operation with transmission/reception at the second device 120 may be assumed as off or non-active. In other words, the second device 120 may not perform transmission/reception outside the cell discontinuous pattern 320. In this way, the first device 110 may monitor or the activation of the cell discontinuous operation during a sleeping period of the second device 120. It is noted that the cell discontinuous operation pattern 320 may be a cell DRX pattern or a cell DTX pattern.

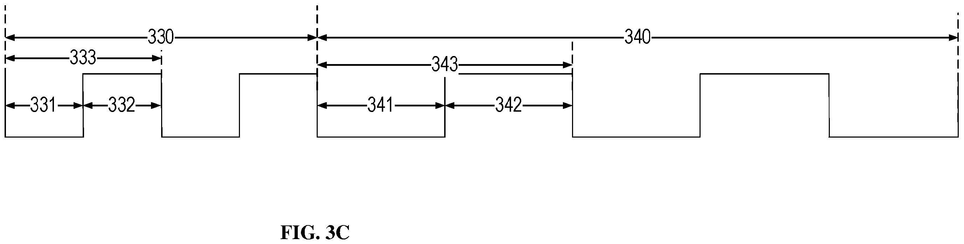

In some example embodiments, the cell may be configured with a plurality of cell discontinuous operations. The plurality of cell discontinuous operations may include any suitable number of cell discontinuous operations. FIG. 3C shows an example of the configurations of two cell discontinuous operations that is configured to the cell. According to the cell discontinuous operation pattern 330 shown in FIG. 3C, there is an on duration 331 (also referred to as active period) and a non-active period 332 within one periodicity 333 of one cell discontinuous operation. According to the cell discontinuous operation pattern 340 shown in FIG. 3C, there is an on duration 341 (also referred to as active period) and a non-active period 342 within one periodicity 343 of another cell discontinuous operation. It is noted that the cell discontinuous operation pattern 330 may be a cell DRX pattern or a cell DTX pattern and the cell discontinuous operation pattern 340 may be a cell DRX pattern or a cell DTX pattern.

Referring back to FIG. 2, the second device 120 transmits (2020) configuration information associated with DCI for an action on the cell discontinuous operation to the first device 110. In other words, the first device 110 receives the configuration information associated with the DCI for the action on the cell discontinuous operation from the second device 120. The configuration information indicates when to monitor the DCI. Further, as mentioned above, the cell discontinuous operation may include one or more of: the cell DTX or the cell DRX. The action on the cell discontinuous operation may include an activation of the cell discontinuous operation. Alternatively, the action on the cell discontinuous operation may include a deactivation of the cell discontinuous operation. In some other example embodiments, the action may include switching from one cell discontinuous operation to another cell discontinuous operation, i.e., deactivating the current cell discontinuous operation and activating the other cell discontinuous operation.

In an example embodiment, the DCI may be scrambled by a dedicated radio network temporary identifier (RNTI). For example, a network energy saving (NES)-RNTI (NES-RNTI) may be used to scramble the DCI. By way of example, the DCI may be a group-common DCI format 2_x with cyclic redundancy check (CRC) scrambled with the nes-RNTI.

The first device 110 may determine (2030) when to monitor the DCI based on the configuration information. For example, the DCI may be monitored by the first device 110 in one or any combination of the following periods: during a period with normal network operation of always on/active; or during a period with the network sleeping operation of always off/non-active; or during the active and/or non-active period of cell DTX/DRX.

The first device 110 monitors (2040) the DCI from the second device 120 based on the configuration information and a status of the cell discontinuous operation. In other words, the first device 110 may receive the DCI based on the configuration information and the status of the cell discontinuous operation. That is, the second device 120 transmits (2050) the DCI based on the configuration information and the status of the cell discontinuous operation to the first device 110. The first device 110 may monitor the DCI indicating the action per periodicity configured by the second device 120. Various examples are given below how the configuration information and status of the cell discontinuous operation (active status or deactivated status) affect the monitoring and receiving of the DCI from the second device 120. For example, the first device 110 may monitor the DCI differently when the status of the cell discontinuous operation is active and when the status of the cell discontinuous operation is deactivated. For example, if the cell discontinuous operation is in the active status, the DCI may be monitored during a monitoring period associated with the cell discontinuous operation. Alternatively, if the cell discontinuous operation is in the active status, the DCI may be monitored during a monitoring period associated with a different cell discontinuous operation (for example, a default cell discontinuous operation).

The first device 110 may perform (2060) the action based on the received DCI. For example, the first device 110 may perform the activation or the deactivation of the cell discontinuous operation based on the received DCI. In this way, it can achieve enhanced handling of activation/deactivation of cell DTX/DRX based on the new group-common DCI format 2_x. Further, it can realize optimized tradeoff between network energy saving (with cell DTX/DRX enabled), quality of service (QoS) fulfillment (dynamic indication of cell DRX/DRX (de)-activation, and UE power saving (optimized monitoring occasions).

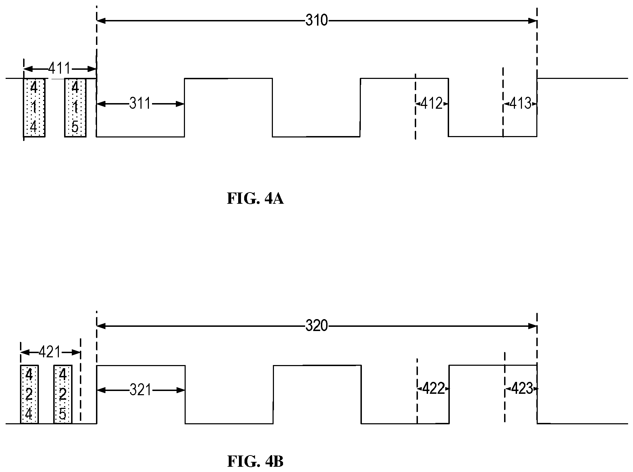

Only for the purpose of illustrations, example embodiments of monitoring the DCI are described with reference to FIG. 4A to FIG. 4F.

In some example embodiments, the configuration information may indicate a time offset (also referred to as "first time offset") relative to a start of the cell discontinuous operation. The start of the cell discontinuous operation may be intended as a potential start of the cell discontinuous operation. In other words, the start may refer to a potential start of the on duration of the cell discontinuous operation. For example, if the DCI indicates the activation of the cell discontinuous operation, the start is an actual start of the cell discontinuous operation. In some example embodiments, the first time offset can be relative to a "time parameter" or "timing point" of the cell discontinuous operation. By way of example, the timing point may refer to a start timing point of the on duration of the cell discontinuous operation. The cell discontinuous operation may be in deactivated status. In other words, the cell discontinuous operation is configured but no activated or not applied.

The first device 110 may determine a start time point (also referred to as "first start time point") based on the first time offset and the start of the cell discontinuous operation. In this case, the first device 110 may monitor the DCI indicating the activation of the cell discontinuous operation from the first start time point. The second device 120 may transmit the DCI indicating the activation of the cell discontinuous operation based on the first time offset and the start of the cell discontinuous operation. Since the DCI indicates the activation of the cell discontinuous operation, the first device 110 may perform the activation of the cell discontinuous operation based on the DCI. For example, the activation of the cell discontinuous operation may be applied based on the DCI from the start of the cell discontinuous operation.

In an example embodiment, the first time offset is relative to a start of a non-active period in the cell discontinuous operation. In other words, the start of the cell discontinuous operation may be a start of the non-active period in the cell discontinuous operation. The non-active period may be a subsequent non-active period after the reception of the DCI. For example, as shown in FIG. 4A, the first time offset 411 may be relative to the start of the non-active period 311 in the cell discontinuous operation. In addition, the first device 110 may monitor the DCI on one or more of the monitoring occasions 414 and 415 within the first time offset 411.

In another example embodiment, the first time offset is relative to a start of an active period in the cell discontinuous operation. In other words, the start of the cell discontinuous operation may be a start of the active period in the cell discontinuous operation. The active period may be a subsequent active period after the reception of the DCI. For example, as shown in FIG. 4B, the first time offset 421 may be relative to the start of the active period 321 in the cell discontinuous operation. In addition, the first device 110 may monitor the DCI on one or more of the monitoring occasions 424 and 425 within the first time offset 421.

Alternatively, or in addition, the configuration information may indicate a time offset (also referred to as "second time offset") relative to a switching boundary in the cell discontinuous operation. The cell discontinuous operation may be in activated status. In other words, the cell discontinuous operation is using or applied. The switching boundary may refer to a boundary between an active time period or a non-active time period in the cell discontinuous operation.

The first device 110 may determine a start time point (also referred to as "second start time point") based on the second time offset and the switching boundary. In this case, the first device 110 may monitor the DCI indicating the deactivation of the cell discontinuous operation from the second start time point. The second device 120 may transmit the DCI indicating the deactivation of the cell discontinuous operation based on the second time offset and the switching boundary. Since the DCI indicates the deactivation of the cell discontinuous operation, the first device 110 may perform the deactivation of the cell discontinuous operation based on the DCI.

In an example embodiment, the second time offset may be relative to an active-to-nonactive switching boundary in the cell discontinuous operation. For example, as shown in FIG. 4A, the time offset 412 may be relative to the active-to-nonactive switching boundary. The first device 110 may monitor the DCI indicating the deactivation of the cell discontinuous operation on one or more monitoring occasions (not shown) within the time offset 412. As another example, as shown in FIG. 4B, the time offset 423 may be relative to the active-to-nonactive switching boundary. The first device 110 may monitor the DCI indicating the deactivation of the cell discontinuous operation on one or more monitoring occasions (not shown) within the time offset 423.

In another example embodiment, the second time offset may be relative to a nonactive-to-active switching boundary in the cell discontinuous operation. For example, as shown in FIG. 4A, the time offset 413 may be relative to the nonactive-to-active switching boundary. The first device 110 may monitor the DCI indicating the deactivation of the cell discontinuous operation on one or more monitoring occasions (not shown) within the time offset 413. As another example, as shown in FIG. 4B, the time offset 422 may be relative to the nonactive-to-active switching boundary. The first device 110 may monitor the DCI indicating the deactivation of the cell discontinuous operation on one or more monitoring occasions (not shown) within the time offset 422.

Moreover, a periodicity can be configured by the second device 120, which defines how frequent the first device 110 monitoring on such DCI indicting the deactivation of the cell discontinuous operation during the cell DTX/DRX active period. The periodicity of UE monitoring can be configured such that it is the integer number of configured cell DTX/DRX periodicity, for example, the first device 110 performs the monitoring of DCI indicating the deactivation of the cell discontinuous operation in every 5th active time or non-active period of the cell discontinuous operation after the activation of the cell discontinuous operation.

In some example embodiments, as mentioned above, the cell may be configured with the plurality of cell discontinuous operations including the cell discontinuous operation. In an example embodiment, none of the plurality of cell discontinuous operations is activated. In this case, the first device 110 may monitor the DCI indicating an activation of the cell discontinuous operation, during an active period in a default cell discontinuous operation in the plurality of cell discontinuous operations. The first device 110 may perform the activation of the cell discontinuous operation in the plurality of cell discontinuous operations based on the DCI.

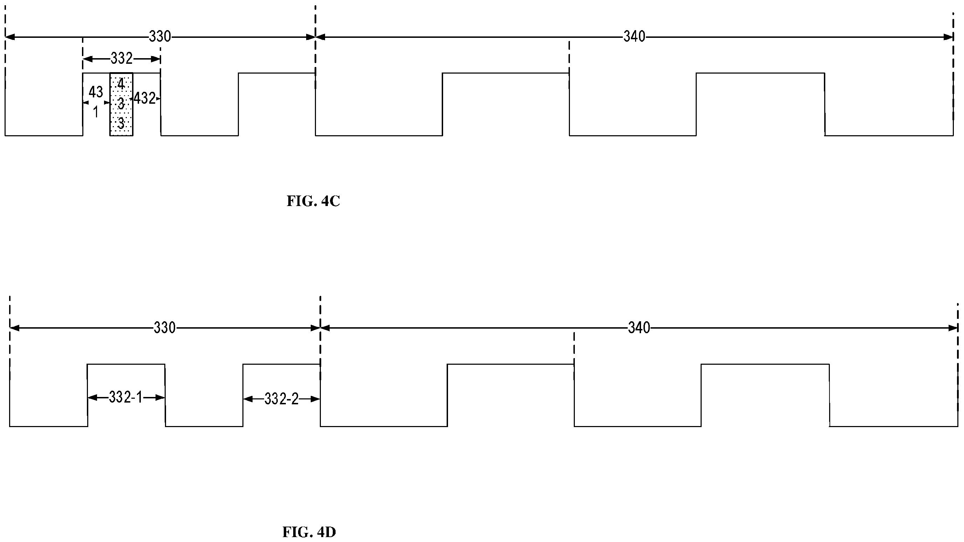

In an example embodiment, the configuration information may include a time offset (also referred to as "third time offset") that is relative to a start or an end of the active period in the default cell discontinuous operation. The first device 110 may determine a start time point (also referred to as "third start time point") based on the third time offset and a status of the default cell discontinuous operation. In this case, the first device 110 may monitor the DCI indicating an activation of another cell discontinuous operation from the third start time point within the active period in the default discontinuous operation. The first device 110 may perform the activation of the other cell discontinuous operation based on the downlink control information. For example, as shown in FIG. 4C, if the cell discontinuous operation pattern 330 is the pattern of the default discontinuous operation, the third time offset may be time offset 431 that is relative to the start of the active period 332. Alternatively, the third time offset may be time offset 432 that is relative to the end of the active period 332. The first device 110 may monitor the DCI indicating the activation of the cell discontinuous operation on a monitoring occasion 433.

Moreover, a periodicity can be configured by the second device 120, which defines how frequent the first device 110 monitoring on such DCI indicating the activation of the cell discontinuous operation during the active period of the default DTX pattern. The periodicity of UE monitoring can be configured such that: it is the integer number of configured cell DTX/DRX periodicity, for example, the first device 110 performs the monitoring of the DCI in every 3rd active time of default DTX/DRX pattern.

In some example embodiments, the default cell discontinuous operation may be the first one in the plurality of cell discontinuous operations. Alternatively, the default cell discontinuous operation may be explicitly indicated by the second device 120. In some other example embodiments, the default cell discontinuous operation may be a last activated cell discontinuous operation in the plurality of cell discontinuous operations. For example, if a cell discontinuous operation was earlier activated and deactivated, and the cell currently has cell DTX/DRX configured and deactivated, the first device 110 may be configured to monitor for the DCI indicating the activation within the active period of the last activated DTX pattern.

In some example embodiments, the cell is configured with a plurality of cell discontinuous operations, and the cell discontinuous operation in the plurality of cell discontinuous operations is in activated status. In this case, the first device 110 may monitor the DCI indicating the deactivation of the cell discontinuous operation, during an active period in the cell discontinuous operation. For example, as shown in FIG. 4D, if the cell discontinuous operation pattern 330 is in activated status, the first device 110 may monitor the DCI indicating the deactivation during the active period 332-1. Alternatively, or in addition, the first device 110 may monitor the DCI indicating the deactivation of the cell discontinuous operation, during entire active periods in the cell discontinuous operation, i.e., monitoring occasions according to the monitoringSlotPeriodicityAndOffset/duration/monitoringSymbolsWithinSlot in SearchSpace configuration. For example, as shown in FIG. 4D, if the cell discontinuous operation pattern 330 is in activated status, the first device 110 may monitor the DCI indicating the deactivation during the entire active periods include the active periods 332-1 and 332-2. The first device 110 can perform the deactivation of the cell discontinuous operation based on the DCI.

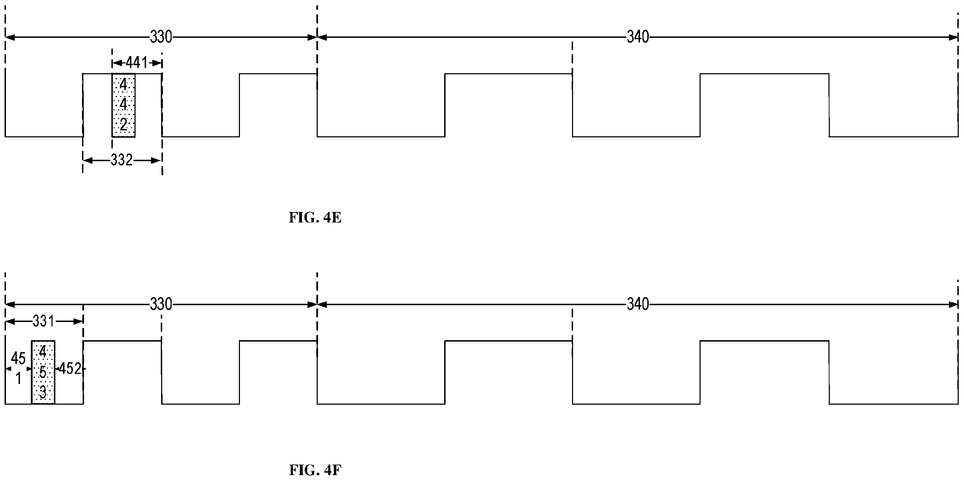

Alternatively, if the cell is configured with a plurality of cell discontinuous operations and the cell discontinuous operation in the plurality of cell discontinuous operations is in activated status, the configuration information may indicate a time offset (also referred to as "fourth time offset") that is relative to an active-to-nonactive switching boundary in an active period in the cell discontinuous operation. For example, as shown in FIG. 4E, if the cell discontinuous operation pattern 330 is in activated status, the fourth time offset may be time offset 441 that is relative to the active-to-nonactive switching boundary in the active period 332. The first device 110 may monitor the DCI indicating the deactivation on the monitoring occasion 442.

Moreover, a periodicity can be configured by the second device 120, which defines how frequent the first device 110 monitoring on such DCI indicating the deactivation during the active period of the currently activated DTX/DRX pattern (for example, the DTX/DRX pattern 330). The periodicity of UE monitoring can be configured such that: it is the integer number of configured cell DTX/DRX periodicity, for example, the first device 110 performs the monitoring of the DCI in every 4th active time of currently activated DTX/DRX pattern.

In some example embodiments, if the DCI indicating the deactivation of the cell discontinuous operation is received during the active period, the first device 110 may perform the deactivation of the cell discontinuous operation based on the received DCI. Alternatively, or in addition, the first device 110 may perform an activation of a further cell discontinuous operation in the plurality of cell discontinuous operations. For example, if the cell currently has cell DTX/DRX configured and activated for cell DTX/DRX pattern 1 (for example, the cell DTX/DRX pattern 330) and wants to switch to cell DTX/DRX pattern 2 (for example, cell DTX/DRX pattern 340), the first device 110 may be configured to monitor for the DCI within the active period of the currently activated cell DTX/DRX pattern 1 (for example, the cell DTX/DRX pattern 330). The activating DCI for cell DTX/DRX pattern 2 (for example, the cell DTX/DRX pattern 340) may imply the deactivation of cell DTX/DRX pattern 1 as only one cell DTX/DRX pattern can be active at the same time.

In some example embodiments, if the cell is configured with a plurality of cell discontinuous operations, and the cell discontinuous operation in the plurality of cell discontinuous operations is in activated status, the first device 110 may monitor the DCI indicating a deactivation of the cell discontinuous operation, during an inactive period in the cell discontinuous operation. The first device 110 may perform the deactivation of the cell discontinuous operation based on the downlink control information. For example, if the cell currently has cell DTX configured and activated, the first device 220 is configured to monitor for the DCI indicating the deactivation within the inactive period of the currently activated DTX pattern.

In an example embodiment, the configuration information indicates a time offset (also referred to as "fifth time offset") that is relative to a start or an end of an inactive period in the cell discontinuous operation. The first device 110 may determine a start time point (also referred to as "fifth start time point") based on the fifth time offset, and the start or the end of the inactive period. In this case, the first device 110 may monitor, from the fifth start time point, the downlink control information indicating a deactivation of the cell discontinuous operation. For example, as shown in FIG. 4F, if the cell discontinuous operation pattern 330 is the pattern of the discontinuous operation, the fifth time offset may be time offset 451 that is relative to the start of the inactive period 331. Alternatively, the fifth time offset may be time offset 452 that is relative to the end of the inactive period 331. The first device 110 may monitor the DCI indicating the deactivation of the cell discontinuous operation on a monitoring occasion 453.

Moreover, a periodicity can be configured by the second device 120, which defines how frequent the first device 110 monitoring on such DCI indicating the deactivation during the inactive period of currently activated DTX/DRX pattern (for example, the DTX/DRX pattern 330). The periodicity of UE monitoring can be configured such that: it is the integer number of configured cell DTX/DRX periodicity, for example, the first device 110 performs the monitoring of deactivating DCI in every 6th inactive time of currently activated DTX/DRX pattern. In some other example embodiments, the frequency of monitoring occasions (MOs) may be configured by the second device 120 with respect to the inactive period, i.e. via monitoringSlotPeriodicityAndOffset/duration/ monitoringSymbolsWithinSlot of SearchSpace configuration.

In some example embodiments, if the DCI indicating the deactivation of the cell discontinuous operation is received during the inactive period, the first device 110 may perform the deactivation of the cell discontinuous operation based on the received DCI. Alternatively, or in addition, the first device 110 may perform an activation of a further cell discontinuous operation in the plurality of cell discontinuous operations. For example, if the cell currently has cell DTX/DRX configured and activated for cell DTX/DRX pattern 1 (for example, the cell DTX/DRX pattern 330) and wants to switch to cell DTX/DRX pattern 2 (for example, cell DTX/DRX pattern 340), the first device 110 may be configured to monitor for the DCI within the inactive period of the currently activated cell DTX/DRX pattern 1 (for example, the cell DTX/DRX pattern 330). The activating DCI for cell DTX/DRX pattern 2 (for example, the cell DTX/DRX pattern 340) may imply the deactivation of cell DTX/DRX pattern 1 as only one cell DTX/DRX pattern can be active at the same time.

In some example embodiments, if both cell DTX and DRX are configured, the first device 110 may monitor for the DCI in the on duration of the cell DTX, which may or may not be aligned with the on duration of cell DRX. In some example embodiments, there may be one or more monitoring occasions defined relative to the first monitoring occasion defined in embodiments above.

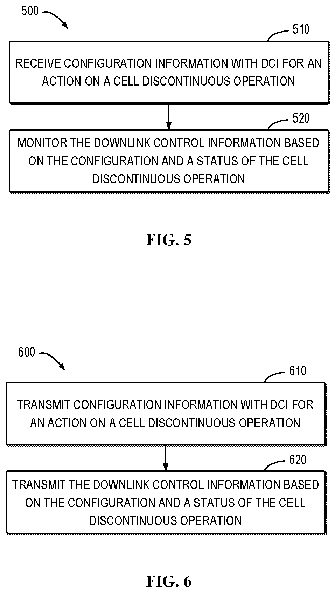

FIG. 5 shows a flowchart of an example method 500 implemented at a first device in accordance with some example embodiments of the present disclosure. For the purpose of discussion, the method 500 will be described from the perspective of the first device 110 in FIG. 1.

At block 510, the first device 110 receives, from a network device, configuration information associated with downlink control information for an action on a cell discontinuous operation of a cell. The configuration information indicates when to monitor the downlink control information, and the cell discontinuous operation comprises at least one of: a cell discontinuous transmission or a cell discontinuous reception.

At block 520, the first device 110 monitors the downlink control information based on the configuration information and a status of the cell discontinuous operation.

In some example embodiments, the method 500 further comprises: performing the action on the cell discontinuous operation based on the downlink control information.

In some example embodiments, the configuration information indicates a time offset relative to a start of the cell discontinuous operation, and the cell discontinuous operation is in deactivated status, and the method 500 further comprises a start time point based on the first time offset and the start of the cell discontinuous operation; monitoring, from the start time point, the downlink control information related to the cell discontinuous operation; and performing an activation of the cell discontinuous operation based on the downlink control information indicating the activation of the cell discontinuous operation.

In some example embodiments, the start of the cell discontinuous operation is a start of a non-active period in the cell discontinuous operation, or wherein the start of the cell discontinuous operation is a start of an active period in the cell discontinuous operation.

In some example embodiments, the configuration information indicates a time offset relative to a switching boundary in the cell discontinuous operation, and the cell discontinuous operation is in activated status, and the method 500 further comprises determining a start time point based on the time offset and the switching boundary; monitoring, from the start time point, the downlink control information related to the cell discontinuous operation ; and performing a deactivation of the cell discontinuous operation based on the downlink control information indicating the deactivation of the cell discontinuous operation.

In some example embodiments, the time offset is relative to an active-to-nonactive switching boundary in the cell discontinuous operation, or wherein the time offset is relative to a nonactive-to-active switching boundary in the cell discontinuous operation.

In some example embodiments, the cell is configured with a plurality of cell discontinuous operations, and none of the plurality of cell discontinuous operations is activated, and the method 500 further comprises monitoring the downlink control information related to the cell discontinuous operation, during an active period in a default cell discontinuous operation in the plurality of cell discontinuous operations; and performing an activation of the cell discontinuous operation in the plurality of cell discontinuous operations based on the downlink control information indicating the activation of the cell discontinuous operation.

In some example embodiments, the configuration information comprises a time offset that is relative to a start or an end of the active period in the default cell discontinuous operation, and the method 500 further comprises determining a start time point based on the time offset and a status of the default cell discontinuous operation; and monitoring the downlink control information related to the cell discontinuous operation from the start time point within the active period in the default cell discontinuous operation; and performing the activation of the cell discontinuous operation based on the downlink control information indicating an activation of the default cell discontinuous operation.

In some example embodiments, the default cell discontinuous operation is the first one in the plurality of cell discontinuous operations, or wherein the default cell discontinuous operation is explicitly indicated by the network device, or wherein the default cell discontinuous operation is a last activated cell discontinuous operation in the plurality of cell discontinuous operations.

In some example embodiments, the cell is configured with a plurality of cell discontinuous operations, and the cell discontinuous operation in the plurality of cell discontinuous operations is in activated status, and the method 500 further comprises monitoring the downlink control information related to the cell discontinuous operation, during an active period in the cell discontinuous operation; and performing a deactivation of the cell discontinuous operation based on the downlink control information indicating the deactivation of the cell discontinuous operation.

In some example embodiments, the method 500 further comprises: monitoring the downlink control information related to the cell discontinuous operation, during entire active periods in the cell discontinuous operation.

In some example embodiments, the configuration information indicates a time offset relative to an active-to-nonactive switching boundary in an active period in the cell discontinuous operation, and the method 500 further comprises determining a start time point based on the time offset and the active-to-nonactive switching boundary; monitoring, from the start time point, the downlink control information related to the cell discontinuous operation.

In some example embodiments, the method 500 further comprises: in accordance with a determination of a reception of the downlink control information related to the cell discontinuous operation, performing the deactivation of the cell discontinuous operation based on the downlink control information indicating the deactivation of the cell discontinuous operation.

In some example embodiments, the method 500 further comprises: performing an activation of a further cell discontinuous operation in the plurality of cell discontinuous operations.

In some example embodiments, the cell is configured with a plurality of cell discontinuous operations, and the cell discontinuous operation in the plurality of cell discontinuous operations is in activated status, and the method 500 further comprises monitoring the downlink control information related to the cell discontinuous operation, during an inactive period in the cell discontinuous operation; and performing a deactivation of the cell discontinuous operation based on the downlink control information indicating the deactivation of the cell discontinuous operation.

In some example embodiments, the configuration information indicates a time offset relative to a start or an end of an inactive period in the cell discontinuous operation and the method 500 further comprises determining a start time point based on the time offset, and the start or the end of the inactive period; and monitoring, from the start time point, the downlink control related to the cell discontinuous operation.

In some example embodiments, the method 500 further comprises: in accordance with a determination of a reception of the downlink control information indicating the deactivation of the cell discontinuous operation during the inactive period, performing the deactivation of the cell discontinuous operation; and performing an activation of a further cell discontinuous operation in the plurality of cell discontinuous operations.

In some example embodiments, the method 500 further comprises: monitoring, per a periodicity configured by the network device, the downlink control information indicating the action.

In some example embodiments, the downlink control information is scrambled by a dedicated radio network temporary identifier.

In some example embodiments, the action on the cell discontinuous operation comprises one of: an activation of the cell discontinuous operation, or a deactivation of the cell discontinuous operation.

In some example embodiments, the apparatus comprises a terminal device.

FIG. 6 shows a flowchart of an example method 600 implemented at a second device in accordance with some example embodiments of the present disclosure. For the purpose of discussion, the method 600 will be described from the perspective of the second device 120 in FIG. 1.

At block 610, the second device 120 transmits, to a terminal device, configuration information associated with downlink control information for an action on a cell discontinuous operation of a cell. The configuration information indicates when to monitor the downlink control information, and the cell discontinuous operation comprises at least one of: a cell discontinuous transmission or a cell discontinuous reception.

At block 620, the second device 120 transmits, to the terminal device, the downlink control information based on the configuration information and a status of the cell discontinuous operation.

In some example embodiments, the configuration information comprises a time offset relative to a start of the cell discontinuous operation configuration, and the cell discontinuous operation of the cell is in deactivated status, and the method 600 further comprises transmitting the downlink control information indicating an activation of the cell discontinuous operation configuration from a start time point that is based on the time offset and the start of the cell discontinuous operation.

In some example embodiments, the start of the cell discontinuous operation is a start of a non-active period in the cell discontinuous operation, or wherein start of the cell discontinuous operation is a start of an active period in the cell discontinuous operation.

In some example embodiments, the configuration information comprises a time offset relative to a switching boundary in the cell discontinuous operation, and the cell discontinuous operation of the cell is in activated status, and the method 600 further comprises transmitting the downlink control information indicating a deactivation of the cell discontinuous operation from a start time point that is based on the time offset and the switching boundary.

In some example embodiments, the time offset is relative to an active-to-nonactive switching boundary in the cell discontinuous operation configuration, or wherein the time offset is relative to a nonactive-to-active switching boundary in the cell discontinuous operation configuration.

In some example embodiments, the cell is configured with a plurality of cell discontinuous operations, and none of the plurality of cell discontinuous operations is activated and the method 600 further comprises transmitting the downlink control information indicating an activation of the cell discontinuous operation, during an active period in a default cell discontinuous operation in the plurality of cell discontinuous operations.

In some example embodiments, the configuration information comprises a time offset that is relative to a start or an end of the active period in the default cell discontinuous operation, and the method 600 further comprises transmitting the downlink control information indicating an activation of the cell discontinuous operation from a start time point that is based on the time offset and a status of the default cell discontinuous operation.

In some example embodiments, the default cell discontinuous operation is the first one in the plurality of cell discontinuous operations, or wherein the default cell discontinuous operation is explicitly indicated by the network device, or wherein the default cell discontinuous operation is a last activated cell discontinuous operation in the plurality of cell discontinuous operations.

In some example embodiments, the cell is configured with a plurality of cell discontinuous operations, and the cell discontinuous operation in the plurality of cell discontinuous operations is in activated status and the method 600 further comprises transmitting the downlink control information indicating a deactivation of the cell discontinuous operation, during an active period in the cell discontinuous operation.

In some example embodiments, the method 600 further comprises: transmitting the downlink control information indicating the deactivation of the cell discontinuous operation, during entire active periods in the cell discontinuous operation.

In some example embodiments, the configuration information comprises a time offset relative to an active-to-nonactive switching boundary in the cell discontinuous operation configuration, and the method 600 further comprises determining a start time point; and transmitting, from a start time point that is based on the time offset and the active-to-nonactive switching boundary, the downlink control information indicating a deactivation of the cell discontinuous operation.

In some example embodiments, the cell is configured with a plurality of cell discontinuous operations, and the cell discontinuous operation in the plurality of cell discontinuous operations is in activated status and the method 600 further comprises transmitting the downlink control information indicating a deactivation of the cell discontinuous operation, during an inactive period in the cell discontinuous operation configuration.

In some example embodiments, the configuration information indicates a time offset relative to a start or an end of an inactive period in the cell discontinuous operation, and the method 600 further comprises transmitting, from a start time point that is based on the time offset, and the start or the end of the inactive period, the downlink control information indicating a deactivation of the cell discontinuous operation.

In some example embodiments, the method 600 further comprises: transmitting, per a periodicity configured by the network device, the downlink control information indicating the action.

In some example embodiments, the downlink control information is scrambled by a dedicated radio network temporary identifier.

In some example embodiments, the action on the cell discontinuous operation comprises one of: an activation of the cell discontinuous operation, or a deactivation of the cell discontinuous operation.

In some example embodiments, the apparatus comprises a network device.

In some example embodiments, a first apparatus capable of performing any of the method 500 (for example, the first device 110 in FIG. 1) may comprise means for performing the respective operations of the method 500. The means may be implemented in any suitable form. For example, the means may be implemented in a circuitry or software module. The first apparatus may be implemented as or included in the first device 110 in FIG. 1.

In some example embodiments, the first apparatus comprises means for receiving, from a network device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and means for monitoring the downlink control information based on the configuration information and a status of the cell discontinuous operation.

In some example embodiments, the first apparatus further comprises: means for performing the action on the cell discontinuous operation based on the downlink control information.

In some example embodiments, the configuration information indicates a time offset relative to a start of the cell discontinuous operation, and the cell discontinuous operation is in deactivated status, and means for determining a start time point based on the first time offset and the start of the cell discontinuous operation; means for monitoring, from the start time point, the downlink control information related to the cell discontinuous operation; and means for performing an activation of the cell discontinuous operation based on the downlink control information indicating the activation of the cell discontinuous operation .

In some example embodiments, the start of the cell discontinuous operation is a start of a non-active period in the cell discontinuous operation, or wherein the start of the cell discontinuous operation is a start of an active period in the cell discontinuous operation.

In some example embodiments, the configuration information indicates a time offset relative to a switching boundary in the cell discontinuous operation, and the cell discontinuous operation is in activated status, and means for determining a start time point based on the time offset and the switching boundary; means for monitoring, from the start time point, the downlink control information related to the cell discontinuous operation ; and means for performing a deactivation of the cell discontinuous operation based on the downlink control information indicating the deactivation of the cell discontinuous operation.

In some example embodiments, the time offset is relative to an active-to-nonactive switching boundary in the cell discontinuous operation, or wherein the time offset is relative to a nonactive-to-active switching boundary in the cell discontinuous operation.

In some example embodiments, the cell is configured with a plurality of cell discontinuous operations, and none of the plurality of cell discontinuous operations is activated, and means for monitoring the downlink control information related to the cell discontinuous operation, during an active period in a default cell discontinuous operation in the plurality of cell discontinuous operations; and means for performing an activation of the cell discontinuous operation in the plurality of cell discontinuous operations based on the downlink control information indicating the activation of the cell discontinuous operation.

In some example embodiments, the configuration information comprises a time offset that is relative to a start or an end of the active period in the default cell discontinuous operation, and means for determining a start time point based on the time offset and a status of the default cell discontinuous operation; and means for monitoring the downlink control information related to the cell discontinuous operation from the start time point within the active period in the default cell discontinuous operation; and means for performing the activation of the cell discontinuous operation based on the downlink control information indicating an activation of the default cell discontinuous operation.

In some example embodiments, the default cell discontinuous operation is the first one in the plurality of cell discontinuous operations, or wherein the default cell discontinuous operation is explicitly indicated by the network device, or wherein the default cell discontinuous operation is a last activated cell discontinuous operation in the plurality of cell discontinuous operations.

In some example embodiments, the cell is configured with a plurality of cell discontinuous operations, and the cell discontinuous operation in the plurality of cell discontinuous operations is in activated status, and means for monitoring the downlink control information related to the cell discontinuous operation, during an active period in the cell discontinuous operation; and means for performing a deactivation of the cell discontinuous operation based on the downlink control information indicating the deactivation of the cell discontinuous operation.

In some example embodiments, the first apparatus further comprises: means for monitoring the downlink control information related to the cell discontinuous operation, during entire active periods in the cell discontinuous operation.

In some example embodiments, the configuration information indicates a time offset relative to an active-to-nonactive switching boundary in an active period in the cell discontinuous operation and means for determining a start time point based on the time offset and the active-to-nonactive switching boundary; means for monitoring, from the start time point, the downlink control information related to the cell discontinuous operation.

In some example embodiments, the first apparatus further comprises: in accordance with a determination of a reception of the downlink control information related to the cell discontinuous operation, means for performing the deactivation of the cell discontinuous operation based on the downlink control information indicating the deactivation of the cell discontinuous operation.

In some example embodiments, the first apparatus further comprises: means for performing an activation of a further cell discontinuous operation in the plurality of cell discontinuous operations.

In some example embodiments, the cell is configured with a plurality of cell discontinuous operations, and the cell discontinuous operation in the plurality of cell discontinuous operations is in activated status, and means for monitoring the downlink control information related to the cell discontinuous operation, during an inactive period in the cell discontinuous operation; and means for performing a deactivation of the cell discontinuous operation based on the downlink control information indicating the deactivation of the cell discontinuous operation.

In some example embodiments, the configuration information indicates a time offset relative to a start or an end of an inactive period in the cell discontinuous operation and means for determining a start time point based on the time offset, and the start or the end of the inactive period; means for monitoring, from the start time point, the downlink control related to the cell discontinuous operation.

In some example embodiments, the first apparatus further comprises: in accordance with a determination of a reception of the downlink control information indicating the deactivation of the cell discontinuous operation during the inactive period, means for performing the deactivation of the cell discontinuous operation; and means for performing an activation of a further cell discontinuous operation in the plurality of cell discontinuous operations.

In some example embodiments, the first apparatus further comprises: means for monitoring, per a periodicity configured by the network device, the downlink control information indicating the action.

In some example embodiments, the downlink control information is scrambled by a dedicated radio network temporary identifier.

In some example embodiments, the action on the cell discontinuous operation comprises one of: an activation of the cell discontinuous operation, or a deactivation of the cell discontinuous operation.

In some example embodiments, the apparatus comprises a terminal device.

In some example embodiments, the first apparatus further comprises means for performing other operations in some example embodiments of the method 500 or the first device 110. In some example embodiments, the means comprises at least one processor; and at least one memory storing instructions that, when executed by the at least one processor, cause the performance of the first apparatus.

In some example embodiments, a second apparatus capable of performing any of the method 600 (for example, the second device 120 in FIG. 1) may comprise means for performing the respective operations of the method 600. The means may be implemented in any suitable form. For example, the means may be implemented in a circuitry or software module. The second apparatus may be implemented as or included in the second device 120 in FIG. 1.

In some example embodiments, the second apparatus comprises means for transmitting, to a terminal device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and means for transmitting, to the terminal device, the downlink control information based on the configuration information and a status of the cell discontinuous operation.

In some example embodiments, the configuration information comprises a time offset relative to a start of the cell discontinuous operation configuration, and the cell discontinuous operation of the cell is in deactivated status and means for transmitting the downlink control information indicating an activation of the cell discontinuous operation configuration from a start time point that is based on the time offset and the start of the cell discontinuous operation.

In some example embodiments, the start of the cell discontinuous operation is a start of a non-active period in the cell discontinuous operation, or wherein start of the cell discontinuous operation is a start of an active period in the cell discontinuous operation.

In some example embodiments, the configuration information comprises a time offset relative to a switching boundary in the cell discontinuous operation, and the cell discontinuous operation of the cell is in activated status and means for transmitting the downlink control information indicating a deactivation of the cell discontinuous operation from a start time point that is based on the time offset and the switching boundary.

In some example embodiments, the time offset is relative to an active-to-nonactive switching boundary in the cell discontinuous operation configuration, or wherein the time offset is relative to a nonactive-to-active switching boundary in the cell discontinuous operation configuration.

In some example embodiments, the cell is configured with a plurality of cell discontinuous operations, and none of the plurality of cell discontinuous operations is activated and means for transmitting the downlink control information indicating an activation of the cell discontinuous operation, during an active period in a default cell discontinuous operation in the plurality of cell discontinuous operations.

In some example embodiments, the configuration information comprises a time offset that is relative to a start or an end of the active period in the default cell discontinuous operation and means for transmitting the downlink control information indicating an activation of the cell discontinuous operation from a start time point that is based on the time offset and a status of the default cell discontinuous operation.

In some example embodiments, the default cell discontinuous operation is the first one in the plurality of cell discontinuous operations, or wherein the default cell discontinuous operation is explicitly indicated by the network device, or wherein the default cell discontinuous operation is a last activated cell discontinuous operation in the plurality of cell discontinuous operations.

In some example embodiments, the cell is configured with a plurality of cell discontinuous operations, and the cell discontinuous operation in the plurality of cell discontinuous operations is in activated status and means for transmitting the downlink control information indicating a deactivation of the cell discontinuous operation, during an active period in the cell discontinuous operation.

In some example embodiments, the second apparatus further comprises: means for transmitting the downlink control information indicating the deactivation of the cell discontinuous operation, during entire active periods in the cell discontinuous operation.

In some example embodiments, the configuration information comprises a time offset relative to an active-to-nonactive switching boundary in the cell discontinuous operation configuration and means for determining a start time point; means for transmitting, from a start time point that is based on the time offset and the active-to-nonactive switching boundary, the downlink control information indicating a deactivation of the cell discontinuous operation.

In some example embodiments, the cell is configured with a plurality of cell discontinuous operations, and the cell discontinuous operation in the plurality of cell discontinuous operations is in activated status and means for transmitting the downlink control information indicating a deactivation of the cell discontinuous operation, during an inactive period in the cell discontinuous operation configuration.

In some example embodiments, the configuration information indicates a time offset relative to a start or an end of an inactive period in the cell discontinuous operation, and means for transmitting, from a start time point that is based on the time offset, and the start or the end of the inactive period, the downlink control information indicating a deactivation of the cell discontinuous operation.

In some example embodiments, the second apparatus further comprises: means for transmitting, per a periodicity configured by the network device, the downlink control information indicating the action.

In some example embodiments, the downlink control information is scrambled by a dedicated radio network temporary identifier.

In some example embodiments, the action on the cell discontinuous operation comprises one of: an activation of the cell discontinuous operation, or a deactivation of the cell discontinuous operation.

In some example embodiments, the apparatus comprises a network device.

In some example embodiments, the second apparatus further comprises means for performing other operations in some example embodiments of the method 600 or the second device 120. In some example embodiments, the means comprises at least one processor; and at least one memory storing instructions that, when executed by the at least one processor, cause the performance of the second apparatus.

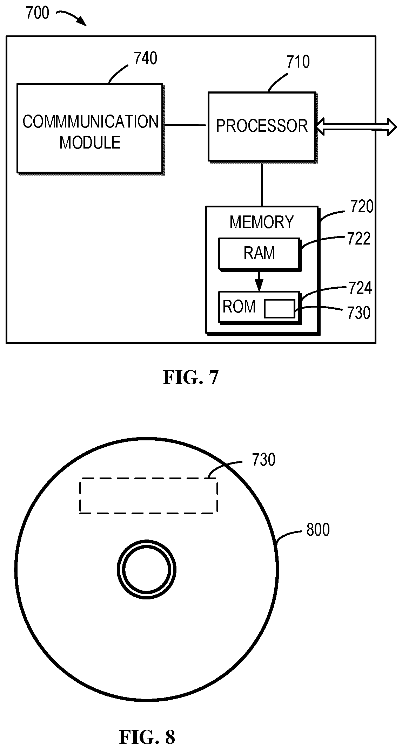

FIG. 7 is a simplified block diagram of a device 700 that is suitable for implementing example embodiments of the present disclosure. The device 700 may be provided to implement a communication device, for example, the first device 110 or the second device 120 as shown in FIG. 1. As shown, the device 700 includes one or more processors 710, one or more memories 720 coupled to the processor 710, and one or more communication modules 740 coupled to the processor 710.

The communication module 740 is for bidirectional communications. The communication module 740 has one or more communication interfaces to facilitate communication with one or more other modules or devices. The communication interfaces may represent any interface that is necessary for communication with other network elements. In some example embodiments, the communication module 740 may include at least one antenna.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The instructions of the program 730 may include instructions for performing operations/acts of some example embodiments of the present disclosure. The program 730 may be stored in the memory, e.g., the ROM 724. The processor 710 may perform any suitable actions and processing by loading the program 730 into the RAM 722.

The example embodiments of the present disclosure may be implemented by means of the program 730 so that the device 700 may perform any process of the disclosure as discussed with reference to FIG. 2 to FIG. 6. The example embodiments of the present disclosure may also be implemented by hardware or by a combination of software and hardware.

In some example embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 8 shows an example of the computer readable medium 800 which may be in form of CD, DVD or other optical storage disk. The computer readable medium 800 has the program 730 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

### Example embodiments

1. An apparatus comprising:
   at least one processor; and
   at least one memory storing instructions that, when executed by the at least one processor, cause the apparatus to:
      receive, from a network device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
      monitor the downlink control information based on the configuration information and a status of the cell discontinuous operation.
2. The apparatus of embodiment 1, wherein the apparatus is caused to:
   perform the action on the cell discontinuous operation based on the downlink control information.
3. The apparatus of embodiment 1, wherein the configuration information indicates a time offset relative to a start of the cell discontinuous operation, and the cell discontinuous operation is in deactivated status, and
   wherein the apparatus is caused to:
   determine a start time point based on the first time offset and the start of the cell discontinuous operation;
   monitor, from the start time point, the downlink control information related to the cell discontinuous operation; and
   perform an activation of the cell discontinuous operation based on the downlink control information indicating the activation of the cell discontinuous operation.
4. The apparatus of embodiment 3, wherein the start of the cell discontinuous operation is a start of a non-active period in the cell discontinuous operation, or
   wherein the start of the cell discontinuous operation is a start of an active period in the cell discontinuous operation.
5. The apparatus of embodiment 1, wherein the configuration information indicates a time offset relative to a switching boundary in the cell discontinuous operation, and the cell discontinuous operation is in activated status, and
   wherein the apparatus is caused to:
   determine a start time point based on the time offset and the switching boundary;
   monitor, from the start time point, the downlink control information related to the cell discontinuous operation; and
   perform a deactivation of the cell discontinuous operation based on the downlink control information indicating the deactivation of the cell discontinuous operation.
6. The apparatus of embodiment 5, wherein the time offset is relative to an active-to-nonactive switching boundary in the cell discontinuous operation, or
   wherein the time offset is relative to a nonactive-to-active switching boundary in the cell discontinuous operation.
7. The apparatus of embodiment 1, wherein the cell is configured with a plurality of cell discontinuous operations, and none of the plurality of cell discontinuous operations is activated, and
   wherein the apparatus is caused to:
   monitor the downlink control information related to the cell discontinuous operation, during an active period in a default cell discontinuous operation in the plurality of cell discontinuous operations; and
   perform an activation of the cell discontinuous operation in the plurality of cell discontinuous operations based on the downlink control information indicating the activation of the cell discontinuous operation.
8. The apparatus of embodiment 7, wherein the configuration information comprises a time offset that is relative to a start or an end of the active period in the default cell discontinuous operation, and
   wherein the apparatus is caused to:
   determine a start time point based on the time offset and a status of the default cell discontinuous operation;
   monitor the downlink control information related to the cell discontinuous operation from the start time point within the active period in the default cell discontinuous operation; and
   perform the activation of the cell discontinuous operation based on the downlink control information indicating an activation of the default cell discontinuous operation.
9. The apparatus of embodiment 7 or 8, wherein the default cell discontinuous operation is the first one in the plurality of cell discontinuous operations, or
   wherein the default cell discontinuous operation is explicitly indicated by the network device, or
   wherein the default cell discontinuous operation is a last activated cell discontinuous operation in the plurality of cell discontinuous operations.
10. The apparatus of embodiment 1, wherein the cell is configured with a plurality of cell discontinuous operations, and the cell discontinuous operation in the plurality of cell discontinuous operations is in activated status, and
   wherein the apparatus is caused to:
   monitor the downlink control information related to the cell discontinuous operation, during an active period in the cell discontinuous operation; and
   perform a deactivation of the cell discontinuous operation based on the downlink control information indicating the deactivation of the cell discontinuous operation.
11. The apparatus of embodiment 10, wherein the apparatus is caused to:
   monitor the downlink control information related to the cell discontinuous operation, during entire active periods in the cell discontinuous operation.
12. The apparatus of embodiment 10, wherein the configuration information indicates a time offset relative to an active-to-nonactive switching boundary in an active period in the cell discontinuous operation, and
   wherein the apparatus is caused to:
   determine a start time point based on the time offset and the active-to-nonactive switching boundary; and
   monitor, from the start time point, the downlink control information related to the cell discontinuous operation.
13. The apparatus of embodiment 10, wherein the apparatus is caused to:
   in accordance with a determination of a reception of the downlink control information related to the cell discontinuous operation,
   perform the deactivation of the cell discontinuous operation based on the downlink control information indicating the deactivation of the cell discontinuous operation.
14. The apparatus of embodiment 13, wherein the apparatus is caused to:
   perform an activation of a further cell discontinuous operation in the plurality of cell discontinuous operations.
15. The apparatus of embodiment 1, wherein the cell is configured with a plurality of cell discontinuous operations, and the cell discontinuous operation in the plurality of cell discontinuous operations is in activated status, and
   wherein the apparatus is caused to:
   monitor the downlink control information related to the cell discontinuous operation, during an inactive period in the cell discontinuous operation; and
   perform a deactivation of the cell discontinuous operation based on the downlink control information indicating the deactivation of the cell discontinuous operation.
16. The apparatus of embodiment 15, wherein the configuration information indicates a time offset relative to a start or an end of an inactive period in the cell discontinuous operation, and
   wherein the apparatus is caused to:
   determine a start time point based on the time offset, and the start or the end of the inactive period; and
   monitor, from the start time point, the downlink control related to the cell discontinuous operation.
17. The apparatus of embodiment 15, wherein the apparatus is caused to:
   in accordance with a determination of a reception of the downlink control information indicating the deactivation of the cell discontinuous operation during the inactive period,
   perform the deactivation of the cell discontinuous operation; and
   perform an activation of a further cell discontinuous operation in the plurality of cell discontinuous operations.
18. The apparatus of any of embodiments 1-17, wherein the apparatus is caused to:
   monitor, per a periodicity configured by the network device, the downlink control information indicating the action.
19. The apparatus of any of embodiments 1-18, wherein the downlink control information is scrambled by a dedicated radio network temporary identifier.
20. The apparatus of any of embodiments 1-19, wherein the action on the cell discontinuous operation comprises one of:
   an activation of the cell discontinuous operation, or
   a deactivation of the cell discontinuous operation.
21. The apparatus of any of embodiments 1-20, wherein the apparatus comprises a terminal device.
22. An apparatus comprising:
   at least one processor; and
   at least one memory storing instructions that, when executed by the at least one processor, cause the apparatus to:
      transmit, to a terminal device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
      transmit, to the terminal device, the downlink control information based on the configuration information and a status of the cell discontinuous operation.
23. The apparatus of embodiment 22, wherein the configuration information comprises a time offset relative to a start of the cell discontinuous operation configuration, and the cell discontinuous operation of the cell is in deactivated status, and
   wherein the apparatus is caused to:
   transmit the downlink control information indicating an activation of the cell discontinuous operation configuration from a start time point that is based on the time offset and the start of the cell discontinuous operation.
24. The apparatus of embodiment 23, wherein the start of the cell discontinuous operation is a start of a non-active period in the cell discontinuous operation, or
   wherein start of the cell discontinuous operation is a start of an active period in the cell discontinuous operation.
25. The apparatus of embodiment 22, wherein the configuration information comprises a time offset relative to a switching boundary in the cell discontinuous operation, and the cell discontinuous operation of the cell is in activated status, and
   wherein the apparatus is caused to:
   transmit the downlink control information indicating a deactivation of the cell discontinuous operation from a start time point that is based on the time offset and the switching boundary.
26. The apparatus of embodiment 25, wherein the time offset is relative to an active-to-nonactive switching boundary in the cell discontinuous operation configuration, or
   wherein the time offset is relative to a nonactive-to-active switching boundary in the cell discontinuous operation configuration.
27. The apparatus of embodiment 22, wherein the cell is configured with a plurality of cell discontinuous operations, and none of the plurality of cell discontinuous operations is activated, and
   wherein the apparatus is caused to:
   transmit the downlink control information indicating an activation of the cell discontinuous operation, during an active period in a default cell discontinuous operation in the plurality of cell discontinuous operations.
28. The apparatus of embodiment 27, wherein the configuration information comprises a time offset that is relative to a start or an end of the active period in the default cell discontinuous operation, and
   wherein the apparatus is caused to:
   transmit the downlink control information indicating an activation of the cell discontinuous operation from a start time point that is based on the time offset and a status of the default cell discontinuous operation.
29. The apparatus of embodiment 27 or 28, wherein the default cell discontinuous operation is the first one in the plurality of cell discontinuous operations, or
   wherein the default cell discontinuous operation is explicitly indicated by the network device, or
   wherein the default cell discontinuous operation is a last activated cell discontinuous operation in the plurality of cell discontinuous operations.
30. The apparatus of embodiment 22, wherein the cell is configured with a plurality of cell discontinuous operations, and the cell discontinuous operation in the plurality of cell discontinuous operations is in activated status, and
   wherein the apparatus is caused to:
   transmit the downlink control information indicating a deactivation of the cell discontinuous operation, during an active period in the cell discontinuous operation.
31. The apparatus of embodiment 30, wherein the apparatus is caused to:
   transmit the downlink control information indicating the deactivation of the cell discontinuous operation, during entire active periods in the cell discontinuous operation.
32. The apparatus of embodiment 30, wherein the configuration information comprises a time offset relative to an active-to-nonactive switching boundary in the cell discontinuous operation configuration, and
   wherein the apparatus is caused to:
   determine a start time point; and
   transmit, from a start time point that is based on the time offset and the active-to-nonactive switching boundary, the downlink control information indicating a deactivation of the cell discontinuous operation.
33. The apparatus of embodiment 22, wherein the cell is configured with a plurality of cell discontinuous operations, and the cell discontinuous operation in the plurality of cell discontinuous operations is in activated status, and
   wherein the apparatus is caused to:
   transmit the downlink control information indicating a deactivation of the cell discontinuous operation, during an inactive period in the cell discontinuous operation configuration.
34. The apparatus of embodiment 33, wherein the configuration information indicates a time offset relative to a start or an end of an inactive period in the cell discontinuous operation, and
   wherein the apparatus is caused to:
   transmit, from a start time point that is based on the time offset, and the start or the end of the inactive period, the downlink control information indicating a deactivation of the cell discontinuous operation.
35. The apparatus of any of embodiments 22-34, wherein the apparatus is caused to:
   transmit, per a periodicity configured by the network device, the downlink control information indicating the action.
36. The apparatus of any of embodiments 22-35, wherein the downlink control information is scrambled by a dedicated radio network temporary identifier.
37. The apparatus of any of embodiments 22-36, wherein the action on the cell discontinuous operation comprises one of:
   an activation of the cell discontinuous operation, or
   a deactivation of the cell discontinuous operation.
38. The apparatus of any of embodiments 22-37, wherein the apparatus comprises a network device.
39. A method comprising:
   receiving, at an apparatus and from a network device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
   monitoring the downlink control information based on the configuration information and a status of the cell discontinuous operation.
40. A method comprising:
   transmitting, at an apparatus and to a terminal device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
   transmitting, to the terminal device, the downlink control information based on the configuration information and a status of the cell discontinuous operation.
41. An apparatus comprising:
   means for receiving, from a network device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
   means for monitoring the downlink control information based on the configuration information and a status of the cell discontinuous operation.
42. An apparatus comprising:
   means for transmitting, to a terminal device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
   means for transmitting, to the terminal device, the downlink control information based on the configuration information and a status of the cell discontinuous operation.
43. A computer readable medium comprising instructions stored thereon for causing an apparatus at least to perform the method of any of embodiments 39-40.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising:
at least one processor; and
at least one memory storing instructions that, when executed by the at least one processor, cause the apparatus to:
receive, from a network device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
monitor the downlink control information based on the configuration information and a status of the cell discontinuous operation.

2. The apparatus of claim 1, wherein the apparatus is caused to:
perform the action on the cell discontinuous operation based on the downlink control information.

3. The apparatus of claim 1, wherein the configuration information indicates a time offset relative to a start of the cell discontinuous operation, and the cell discontinuous operation is in deactivated status, and
wherein the apparatus is caused to:
determine a start time point based on the first time offset and the start of the cell discontinuous operation;
monitor, from the start time point, the downlink control information related to the cell discontinuous operation; and
perform an activation of the cell discontinuous operation based on the downlink control information indicating the activation of the cell discontinuous operation,
wherein the start of the cell discontinuous operation is a start of a non-active period in the cell discontinuous operation, or
wherein the start of the cell discontinuous operation is a start of an active period in the cell discontinuous operation.

4. The apparatus of claim 1, wherein the configuration information indicates a time offset relative to a switching boundary in the cell discontinuous operation, and the cell discontinuous operation is in activated status, and
wherein the apparatus is caused to:
determine a start time point based on the time offset and the switching boundary;
monitor, from the start time point, the downlink control information related to the cell discontinuous operation; and
perform a deactivation of the cell discontinuous operation based on the downlink control information indicating the deactivation of the cell discontinuous operation,
wherein the time offset is relative to an active-to-nonactive switching boundary in the cell discontinuous operation, or
wherein the time offset is relative to a nonactive-to-active switching boundary in the cell discontinuous operation.

5. The apparatus of claim 1, wherein the cell is configured with a plurality of cell discontinuous operations, and none of the plurality of cell discontinuous operations is activated, and
wherein the apparatus is caused to:
monitor the downlink control information related to the cell discontinuous operation, during an active period in a default cell discontinuous operation in the plurality of cell discontinuous operations; and
perform an activation of the cell discontinuous operation in the plurality of cell discontinuous operations based on the downlink control information indicating the activation of the cell discontinuous operation,
wherein the configuration information comprises a time offset that is relative to a start or an end of the active period in the default cell discontinuous operation, and
wherein the apparatus is caused to:
determine a start time point based on the time offset and a status of the default cell discontinuous operation;
monitor the downlink control information related to the cell discontinuous operation from the start time point within the active period in the default cell discontinuous operation; and
perform the activation of the cell discontinuous operation based on the downlink control information indicating an activation of the default cell discontinuous operation.

6. The apparatus of claim 5, wherein the default cell discontinuous operation is the first one in the plurality of cell discontinuous operations, or
wherein the default cell discontinuous operation is explicitly indicated by the network device, or
wherein the default cell discontinuous operation is a last activated cell discontinuous operation in the plurality of cell discontinuous operations.

7. The apparatus of claim 1, wherein the cell is configured with a plurality of cell discontinuous operations, and the cell discontinuous operation in the plurality of cell discontinuous operations is in activated status, and
wherein the apparatus is caused to:
monitor the downlink control information related to the cell discontinuous operation, during an active period in the cell discontinuous operation; and
perform a deactivation of the cell discontinuous operation based on the downlink control information indicating the deactivation of the cell discontinuous operation.

8. The apparatus of claim 7, wherein the apparatus is caused to:
monitor the downlink control information related to the cell discontinuous operation, during entire active periods in the cell discontinuous operation.

9. The apparatus of claim 7, wherein the configuration information indicates a time offset relative to an active-to-nonactive switching boundary in an active period in the cell discontinuous operation, and
wherein the apparatus is caused to:
determine a start time point based on the time offset and the active-to-nonactive switching boundary; and
monitor, from the start time point, the downlink control information related to the cell discontinuous operation.

10. The apparatus of claim 7, wherein the apparatus is caused to:
in accordance with a determination of a reception of the downlink control information related to the cell discontinuous operation,
perform the deactivation of the cell discontinuous operation based on the downlink control information indicating the deactivation of the cell discontinuous operation,
perform an activation of a further cell discontinuous operation in the plurality of cell discontinuous operations.

11. The apparatus of claim 1, wherein the cell is configured with a plurality of cell discontinuous operations, and the cell discontinuous operation in the plurality of cell discontinuous operations is in activated status, and
wherein the apparatus is caused to:
monitor the downlink control information related to the cell discontinuous operation, during an inactive period in the cell discontinuous operation; and
perform a deactivation of the cell discontinuous operation based on the downlink control information indicating the deactivation of the cell discontinuous operation,
wherein the configuration information indicates a time offset relative to a start or an end of an inactive period in the cell discontinuous operation, and
wherein the apparatus is caused to:
determine a start time point based on the time offset, and the start or the end of the inactive period; and
monitor, from the start time point, the downlink control related to the cell discontinuous operation,
wherein the apparatus is caused to:
in accordance with a determination of a reception of the downlink control information indicating the deactivation of the cell discontinuous operation during the inactive period,
perform the deactivation of the cell discontinuous operation; and
perform an activation of a further cell discontinuous operation in the plurality of cell discontinuous operations.

12. The apparatus of any of claims 1-11, wherein the apparatus is caused to:
monitor, per a periodicity configured by the network device, the downlink control information indicating the action.

13. The apparatus of any of claims 1-12, wherein the downlink control information is scrambled by a dedicated radio network temporary identifier.

14. The apparatus of any of claims 1-13, wherein the action on the cell discontinuous operation comprises one of:
an activation of the cell discontinuous operation, or
a deactivation of the cell discontinuous operation.

15. An apparatus comprising:
at least one processor; and
at least one memory storing instructions that, when executed by the at least one processor, cause the apparatus to:
transmit, to a terminal device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
transmit, to the terminal device, the downlink control information based on the configuration information and a status of the cell discontinuous operation.

16. A method comprising:
receiving, at an apparatus and from a network device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
monitoring the downlink control information based on the configuration information and a status of the cell discontinuous operation.

17. A method comprising:
transmitting, at an apparatus and to a terminal device, configuration information associated with downlink control information for an action on a cell discontinuous operation of a cell, wherein the configuration information indicates when to monitor the downlink control information, and the cell discontinuous operation comprises at least one of: a cell discontinuous transmission or a cell discontinuous reception; and
transmitting, to the terminal device, the downlink control information based on the configuration information and a status of the cell discontinuous operation.
